# EUROPEAN PATENT SPECIFICATION

(11) **EP 2 128 442 B1**
(45) Date of publication and mention of the grant of the patent: **04.01.2017**
(21) Application number: 07730453.3
(22) Date of filing: 12.04.2007
(51) Int. Cl.: F04B 43/00, F15B 15/00, B01D 61/06, F04F 13/00, F04B 43/10

(54) **SYSTEM FOR IMPELLING A FLUID BY RECIRCULATION FROM A LOW-PRESSURE MEDIUM TO A HIGH-PRESSURE MEDIUM**
SYSTEM ZUM ANTREIBEN VON FLUID DURCH REZIRKULATION VON EINEM NIEDERDRUCKMEDIUM ZU EINEM HOCHDRUCKMEDIUM
SYSTÈME D'IMPULSION D'UN FLUIDE PAR RECIRCULATION DEPUIS UN MILIEU À BASSE PRESSION VERS UN MILIEU À HAUTE PRESSION

(30) Priority: 08.01.2007 ES 200700054
(43) Date of publication of application: 02.12.2009
(73) Proprietor: Abengoa Hidrógeno, S.A., 41014 Sevilla (ES)
(72) Inventor: DEL POZO POLIDORO, Enrique, E-41018 Sevilla (ES); GALLARDO GARCÍA-ORTA, Victoria, E-41018 Sevilla (ES); BREY SANCHEZ, José Javier, E-41018 Sevilla (ES)
(74) Representative: Ungria López, Javier
(86) International application number: PCT/ES2007/000213
(87) International publication number: WO 2008/084118

(56) References cited:
- ES-A1- 8 203 308
- FR-A1- 2 342 252
- FR-A1- 2 627 237
- FR-A5- 2 175 274
- GB-A- 2 363 741
- GB-A- 2 377 928
- GB-A- 2 377 928
- US-A1- 2004 164 022

## Description

### OBJECT OF THE INVENTION

As stated in the title of this descriptive specification, the present invention relates to a system for impelling a fluid by recirculation from a low-pressure medium to a high-pressure medium, the process being carried out with recovery of the energy contained in the fluid at high pressure in order to aid pumping from low pressure to high pressure, thereby achieving a reduction in the energy contribution required.

The system finds special application in processes of heat exchange and gas dissolution, and also in processes of purification and desalination of water by reverse osmosis, and in general in all processes where its use is feasible and allows the energy consumption to be reduced.

### BACKGROUND OF THE INVENTION

In accordance with the principles of physics, the pumping of a fluid from a low-pressure medium to a high-pressure medium requires an energy contribution directly proportional to the flow being ducted and to the difference in pressures between the two mediums, being also proportional to the product of these two variables.

In processes of purification and desalination of water by reverse osmosis, salt-water is pumped via a membrane in order to achieve its demineralization. Due to the effect of the pressure applied the water passes through the membrane, leaving the salt on the side of the primary circuit and obtaining desalinated water in the secondary circuit. As the process is cumulative, at the end of a certain period of time of functioning of the system, a saline concentration will be obtained in the primary circuit that is incompatible with the proper functioning of the facility, and it becomes necessary to purge the brine produced in order to keep its concentration within certain acceptable limits. Since the brine is at high pressure, if, instead of simply evacuating it to the outside and wasting the energy it contains, its energy were to be utilized in order to help pump the primary water, then a considerable energy saving would be achieved, even if the utilization is always partial since the flow of brine is less than that of the primary water to pump.

Moreover, in processes of heat exchange and gas dissolution, the situation occurs in which the intake and outlet flows are equal, therefore the possibilities ot energy saving are maximum. These cases occur, for example, in submarines, in which a flow of external water is admitted at the pressure corresponding to the depth of sailing, and this pressure has to be reduced in order to use the seawater as process coolant or for dissolving the gases coming from the respiration of the crew or originate by the machinery on board, a flow which later on has to be discharged to the outside returning it at its same original pressure.

There are numerous kinds of energy recirculator in existence that are used, based in all cases on the fluid subjected to high pressure being connected with the fluid at low pressure by means of a moving wall, in such a way that an energy transfer takes place between both fluids.

Depending on their constructional form, existing recirculators belong either to the category of rotary recirculators or to that of linear recirculators.

Specifically, in rotary recirculators the high-pressure conduit contains a turbine or rotary machine fitted with blades, pistons or rotors, functioning as a motor, joined by the shaft to a similar machine fitted in the conduit of the low-pressure fluid, which functions as a pump. The moving wall referred to above is represented by the blades of the two rotary machines, joined by a common shaft.

The advantage of rotary recirculators lies in their relative compactness, though on the other hand they have the drawbacks of high price and low efficiency, all the more so in the case in which the flow to duct and the working pressures are not constant but instead vary as a function of consumption requirements. Since the machines are far from their theoretical functioning point, their efficiency, which is in any case limited, is notably reduced, with which their possibilities of energy recovery are very low.

For their part, linear recirculators have the moving wall in the form of a piston that runs inside the jacket of a cylinder, with one side having the fluid at high pressure, from which energy is extracted, and on the other side is fluid at low pressure to which the energy is fed, increasing its pressure. The key piece in these recirculators is the piston-jacket interface.

Moreover, it is wished that the sealing between the chambers should be as perfect as possible, since, in addition to implying a waste of energy on account of its irreversibility and the consequent increase in entropy this implies, the connections between fluids at different pressures can also produce flooding and dangerous situations in a submarine. In order to obtain sealing there has to exist a certain tightness in the seals of the piston.

Furthermore, in order to achieve a good efficiency the pressures of the two fluids in contact via the moving wall have to be the same, therefore, as is logical, the sliding of the piston has to be smooth and free of resistance due to friction, which is incompatible with being watertight.

Nevertheless, it is always possible to achieve an equilibrium between both objectives, involving a suitable geometry of the inner wall of the jacket and a good surface finish, free of roughness. This requisite, which is easy to achieve when dealing with fairly non-aggressive fluids such as mineral oil or even freshwater, represents a serious obstacle when the fluid to duct is saltwater, all the more so if it contains suspended particles of organic or mineral origin, which, due to their abrasive effect, rapidly deteriorate the interior of the jacket, at the same time damaging the seals of the piston. The abrasive effects of the suspended matter can only be alleviated by means of careful filtration, which implies an added cost and consumes part of the available pressure in the form of load loss.

The alternative designs in the form of plungers, which do not require a polished jacket due to lacking a piston and having the seals in the actual rod, only ease the effects of the abrasive particles, which still end up attacking the polished surface of the rod and its sealing joints.

The advantage of the linear recirculators lies, therefore, in their acceptable efficiency, though nevertheless presenting the drawback that they require an almost continual need for maintenance.

GB2377928 discloses a desalination system. Includes a system for impelling a fluid by recirculation from a low pressure medium to a high-pressure medium, which, having the aim of recovering the energy contained in the fluid at high pressure in order to aid pumping from low to high pressure, thereby reducing the energy contribution required.

It comprises a recirculator with an elongated cylindrical configuration, with a flexible membrane (32) with the same, establishing two independent and sealed chambers,
an outer one connected (52) to an intake for the entrance of fluid and
an inner one connected (50) by one end to the conduit (56) for the processed fluid to the outside, while the other end (54) of said inner chamber is connected to a reactor (22) of any kind, in turn connected to the outer chamber in order to permit the establishment of the distribution and processing of the fluid from its intake to the outlet conduit.

The processed fluid is both the brine or the fresh water respectively.

The shape of the membrane is not mentioned.

An impeller pump (38) is located in the intake.

### DESCRIPTION OF THE INVENTION

The system forming the object of the invention is conceived for solving the problems and drawbacks referred to above, being of the type that uses a moving wall recirculator, which presents the particular feature of being materialized by a flexible membrane, with a tubular and elongated configuration.

The said special recirculator is constituted on the basis of a tubular cylindrical body, straight and elongated, with intake and outlet that are opposite and differentiated, permitting the direction of circulation of the fluid and its quantity in movement to be conserved. Said body of the recirculator is provided at its ends with separate removable flanges for permitting the inspection and replacement of the flexible membrane. One or two flanged intakes, preferably though not in a limiting way located at the ends, linked with a chamber exterior to the membrane, permit the utilization of two-way or three-way valves, indifferently.

In terms of the flexible membrane which the recirculator incorporates, due to having a tubular shape it will be easy to manufacture and therefore be very economical, consisting of an elastic and unalterable material (preferably natural rubber or a synthetic elastomer) that is compatible in its qualities with the fluids to duct. Said membrane is mounted concentrically inside the tubular body of the recirculator, with two independent and sealed chambers being established inside the latter, one inner and the other outer with respect to the membrane, the ends of the said membrane being fastened to separate internal, concentric end necks of the recirculator, the fastening being done by means of respective clips. The sum of the volumes of the two chambers remains constant, independently of the shape adopted by the membrane at each moment, in such a way that the large surface of that membrane and its extreme flexibility cause the pressures in the two chambers to be virtually the same, without there existing any energy losses as a result of friction or rubbing.

On the basis of the design characteristics referred to, the entrance of fluid into the inner chamber of the recirculator causes the membrane to expand and consequently impel the fluid in the outer chamber outwards, while the entrance of fluid in said outer chamber causes the constriction of the membrane and corresponding impelling outwards of the fluid in the inner chamber.

The said membrane is complemented with a perforated tube outside of it and located concentrically with the recirculator, with the aim of limiting the mechanical tensions that are going to be produced in the membrane by an unrestricted expansion thereof, since, during the expansion process of it, a moment will be reached in which it rests on the inner surface of the said tube.

As is evident, the thickness of the membrane will have to be calculated so that it can resist the traction tensions resulting from the application of the maximum possible difference in pressures between the two chambers, though from the point of view that, in order to optimize the efficiency, the pressures on both sides of the membrane ought to be kept practically equal, it is deduced that in practice no dangerous tensions ought to appear during the expansion process of that membrane.

Likewise, provision has been made to fit an axial piece inside the membrane known as a "spine" of the same length as the membrane, said spine consisting of a central and axial tube and three peripheral and longitudinal tubes located at 120°, which are joined to the central tube by means of individual plates or radial ribs, in such a way that, when the membrane is in the neutral position, it adopts an approximately cylindrical shape, remaining practically tangential to the outer generatrices of the peripheral tubes, from which it becomes separated during the expansion process. When the membrane is subjected to an external pressure it abandons its cylindrical shape, becoming constricted so that it adapts itself completely on the outer surface of the spine, whose contour has been calculated so that its length is equal to the inner perimeter of the membrane in the neutral position, and so no tensions or wrinkling can be produced.

In this way, the membrane is protected from subsequent damage since the minimum radius of folding is equivalent to the radius of the tubes and to the support surface provided between them and the radial plates or ribs.

The said piece referred to as a "spine" is complemented with three enveloping bars attached to the peripheral tube of said spine, these bars presenting a shape that varies progressively from pure cylindrical at the ends to a constriction in the middle so that the tensions in the membrane resulting from the change of cross-section are distributed along a considerable length.

Both the tube and the plates or ribs will be provided with traversing holes in order to ensure the rapid evacuation of the internal volume, in such a way that, by means of those holes, the entire length of the membrane is connected, serving as an evacuation route for the fluid even in the unlikely case of any section of the membrane becoming constricted before the others due to the existence of differences in thickness or due to coinciding with an intake conduit to the outer chamber.

The recirculator that is being described requires a distribution system for the fluids that will permit the circulations of those fluids to be established, the distribution system being based on a set of valves of the line or rotary type, with structural characteristics that are simple in both cases since they will be entirely lacking in any pieces that might produce noises, vibrations or collisions which, in the case of underwater vessels of a military nature for example, could facilitate the remote detection of them by a hypothetic enemy.

The system of two-way line valves can form a single combination comprising two valves, one corresponding to the high-pressure circuit and the other corresponding to the low-pressure circuit, with both of them being actuated by a single cylinder fitted with a rod, such that as the cylinder acts alternatively on one valve or the other it is impossible for them both to be open simultaneously, though the valves in question have to be associated with separate springs capable of closing the valve, which is the position that it constantly tends towards.

The said two two-way valves can also be independent, in other words, each of them will have its own cylinder, permitting the closing elements to be removed for inspection or repair without having to decouple the flanges for securing the main tubes.

In certain cases, such as those in which it is required to create difficulties for detection by, for example, submerged vehicles, then it is appropriate and advisable to use the rotary or three-way type valve, which consists of a cylindrical casing with three ports corresponding to the high-pressure, low-pressure and recirculator intakes. Fitted inside the casing is a kind of rotary blade which allows alternative connection or isolation among the said three ports.

In an improved variant of the above solution, provision has been made for the casing to be slightly conical so as, by means of a slight axial displacement of the blade, to compensate for the inevitable wear produced on the rubbing surfaces when the casing is cylindrical. Said conical variant allows the blade to remain always in contact with the inner surface of the casing, though on the basis of a slight axial displacement of the blade, all of which is in such a way that fitted between this blade and the casing is a bushing that is internally conical and externally cylindrical, with the aim of facilitating the conical machining and allowing it to be replaced easily in case of wear, without any need to replace the outer casing, which is a more expensive and complicated element.

As far as the position of the different means defining the system of the invention is concerned, it has to be emphasized that the recirculator, in addition to the intake for the fluid and the outlet conduit for the processed fluid, also includes a connection with a heat exchanger or a device for obtaining dissolutions, generally consisting of a reactor.

The connection between the intake from the outside medium, the chamber for the recirculator outside of the membrane and the exchanger or reactor can be done by means of two two-way valves or one three-way valve. When two two-way valves are used one of them is fitted between the intake and the outer chamber of the recirculator, and the other one is between the outer chamber of the recirculator and the exchanger or reactor. When a three-way valve is used it is fitted in such a way that each of its arms links with each one of the three elements mentioned at the beginning of this paragraph.

In the intake for the recirculator provision has been made for an impeller pump, while in the connection conduit between the recirculator and the reactor a check valve and an outlet pump are provided, with another check valve existing in the outlet conduit at the outside part of the fluid processed in the recirculator.

Finally, it can be said that the increased efficiency of the system is achieved by means of mounting several recirculators in parallel, whose cycles are duly alternated so that they can complement each other reciprocally, since the work cycle consists of two parts of equal theoretical duration, one in which the fluid is taken in and the other in which it is ejected, so that in order to achieve an outlet flow as uniform as possible, several recirculators are disposed in parallel, each of them having its corresponding valves, being the intake and outlet pumps, as well as the process reactor, common to all of them.

Among the advantages of the system using the flexible membrane as described above, and the associated elements in the recirculator, the following can be cited:
- There are no energy losses occasioned by the efficiency of rotary machines or by the friction caused by the contact between pistons and jackets. The energy transfer is controlled by the deformation of an extremely flexible medium with no energy being consumed in this process.
- The fluids in contact through the membrane are almost at the same pressure, so the process is reversible and its efficiency is maximum.
- In case of deterioration due to use, it suffices to replace the membrane, without any complicated machining or special materials being required.
- Salt deposits and impurities in suspension do not affect the surface of the membrane since it never works under friction.
- The design adopted by the recirculator of the invention, based on an elongated tube with opposite and differentiated intake and outlet, permits the direction of circulation of the fluid and its quantity of movement to be conserved, using membranes with a tubular shape that are easy to manufacture in a range of sizes and which are therefore very economical, unlike the case of accumulator devices which use bladders where the intake and outlet of the fluid to be pressurized is controlled by a piece or an aperture, which compels the incoming fluid to reverse its movement direction to the outlet, consuming energy for its acceleration and requiring the use of a closed bladder of precise dimensions.

### BRIEF DESCRIPTION OF THE DRAWINGS

In order to complete the description that is going to be made forthwith, and with the aim of aiding a better understanding of the characteristics of this invention, this descriptive specification is accompanied by a set of drawings on the basis of which the innovations and advantages of system forming the object of the invention will be more easily understood.
**Figure 1****.-** Shows a view in longitudinal section of the recirculator used in the system of the invention.
**Figure 2****.-** Shows a view in transverse section of the tubular and flexible membrane incorporating the recirculator. In this figure, it is shown the position A which corresponds to the rest position; position B which corresponds to the start of constriction; and position C which corresponds to complete constriction of the membrane.
**Figure 3****.-** Shows a longitudinal view of the piece used in the protection of the end zones of the membrane represented in figure 2.
**Figure 4****.-** Shows a view in section corresponding to the line of cut B-B, C-C and D-D represented in the previous figure, representing the different contours which the protection piece acquires as it moves away from the ends towards the middle zone thereof.
**Figure 5****.-** Shows a view in section of the single combination formed by two two-way line valves, suitable for being used in the system of the invention.
**Figure 6****.-** Shows a schematic view of the combination of two two-way line valves, independent and mounted on the recirculator, suitable for use in the system of the invention.
**Figure 7****.-** Shows a view in section of a rotary type valve suitable for use in the system of the invention, replacing the valves represented in figures 5 and 6.
**Figure 8****.-** Shows a view in section of a rotary type valve of conical design, which internally incorporates a bushing with a conical interior and a cylindrical exterior.
**Figure 9****.-** Shows the diagram corresponding to the system at the instant of work in which the transfer of fluid at low pressure is being transferred from the outer chamber of the recirculator to the exchanger or reactor. Another transfer of fluid at low pressure is simultaneously taking place between the exchanger or reactor and the inner chamber of the recirculator.
**Figure 10****.-** Shows the system in the second part of the work cycle, following the first phase of the cycle carried out according to the previous figure. In this instant of work the entrance of fluid at high pressure is taking place from the outer medium to the outer chamber of the recirculator, being pumped at the same time the fluid contained in the inner chamber of the recirculator, ejecting it at a high pressure towards the outer medium.
**Figures 11 and 12****.-** Show separate views of the arrangement represented in figures 9 and 10, having been replaced the two-way valves (i.e., the intake valve and the impelling valve) with a single three-way valve.
**Figure 13****. -** Shows a view corresponding to a diagram of the system in which five recirculators in parallel are used.

### DESCRIPTION OF THE PREFERRED EMBODIMENT

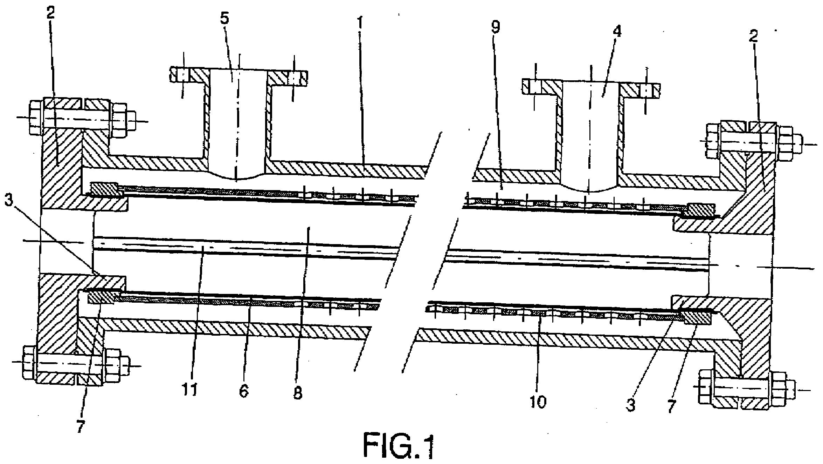

In view of the figures and specifically in relation to figure 1, it can be seen how the recirculator used in the system of the invention is constituted on the basis of a tubular body 1, in which ends are included removable flanges 2 both of which are fitted with an internal neck 3 while close to the ends separate flanged intakes 4 and 5 have been provided for coupling the valves which form part of the distribution system of the fluid, as will be explained further below.

Inside the said body 1 of the recirculator, there is a membrane 6 mounted coaxially and concentrically which as enclosed via its ends on the necks 3 of the flanges 2, this fastening being carried out by means of respective clips 7 which provide watertightness to the two chambers defined inside the body 1 of the recirculator by means of the mentioned membrane 6, the latter being flexible and which may consist of a material made of natural rubber or a synthetic elastomer, compatible in its qualities with the fluid to duct.

As it has been explained before, the membrane 6 creates two concentric chambers 8 and 9, the former being the inner chamber and the latter being the outer chamber, and it can be confirmed that the sum of the volumes of the two chambers 8 and 9 remains constant, independently of the shape adopted by the membrane 6 at each moment. Therefore if fluid enters with a certain volume in one of the chambers, the same volume of fluid needs to exit from the other chamber, all of which in such a way that the large surface of the membrane and its extreme flexibility cause the pressures in the two chambers 8 and 9 to be virtually the same, with no energy losses as a result of friction or rubbing, and being negligible the increase in pressure caused by the elastic tension of the material forming the membrane.

The entrance of fluid to the inner chamber 8 causes the expansion of the membrane 6 and the ejection of fluid from the outer chamber 9, while the entrance of fluid in the outer chamber 9 will cause the constriction of the membrane 6, ejecting fluid from the inner chamber 8.

With the aim of limiting the mechanical tensions that would be produced in the membrane 6 by an unrestricted expansion thereof, provision has been made for the inclusion of a perforated tube 10, concentric with the tubular body 1 of the recirculator, in such a way that during the expansion process of the membrane 6, it will rest on the inner surface of said tube 10, with any additional stress being confined to the parts of the membranes coincident with the holes in that tube 10, which are the only ones that are not completely supported on the inside of the tube.

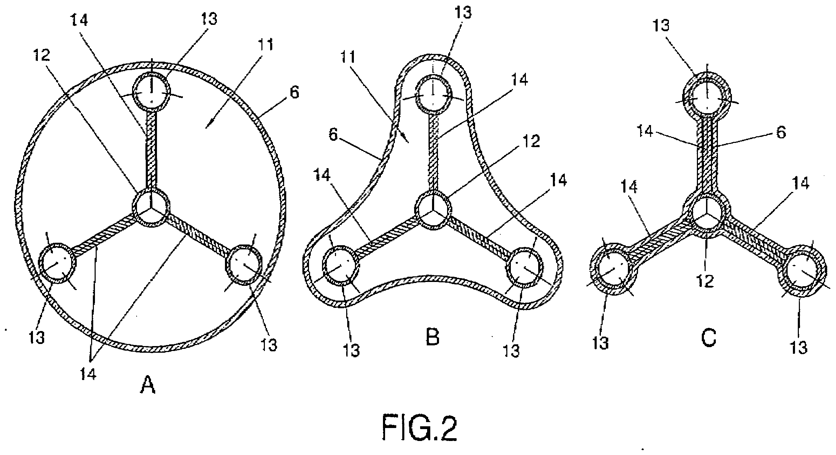

Said membrane 6 is complemented with an inner axial piece 11 known as a "spine" of length equal to the actual membrane 6 and whose section, which can be clearly seen in figure 2, comprises a central tube 12 and three peripheral longitudinal tubes 13 out of phase with each other by 120°, with the central tube being joined to the peripheral tubes by means of radial plates or ribs 14. When the membrane 6 is in the neutral position, it adopts an approximately cylindrical shape, as shown in the detail A of figure 2, remaining practically tangential to the peripheral tubes 13, from which it becomes separated during the expansion process. When the membrane 6 is subjected to an external pressure it abandons the cylindrical shape as shown in detail A of figure 2, becoming progressively constricted as shown in detail B of that figure 2, until reaching the representation of detail C of the same figure 2, in other words, the membrane 6 adapts itself completely on the outer surface of the piece or spine 11, so that the membrane will be protected from subsequent damage since the minimum radius of folding is equivalent to the radius of the tubes and to the support surface provided between them and the radial plates.

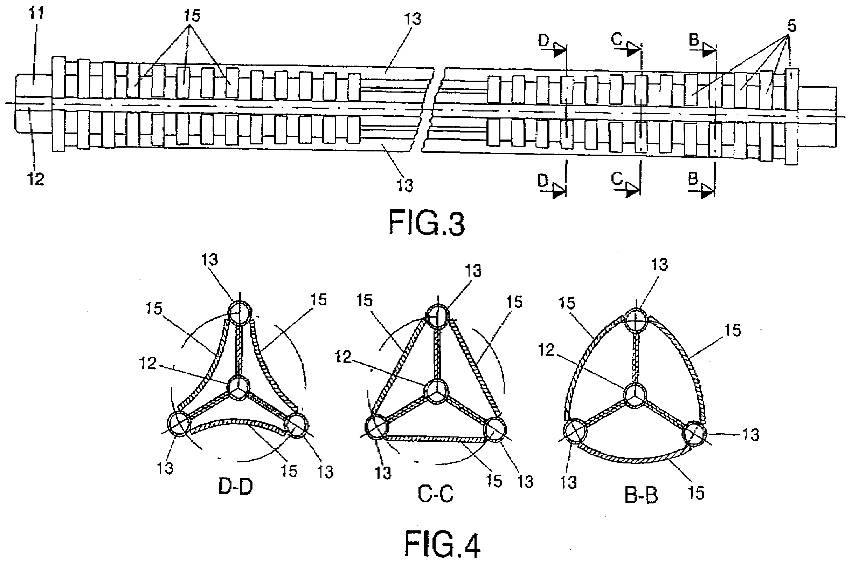

In order to protect the end zones of the membrane 6, which would otherwise pass suddenly from a cylindrical shape to the constricted one, two transition zones have been provided as shown in figures 3 and 4, consisting of the arrangement of three sets of bars 15 as a complement of the piece constituting the spine 11, without thereby hindering the free passage of the fluid, which bars 15 adopt a shape that varies progressively from pure cylindrical at the ends to constricted in the middle zone, these variations being seen in the sections B-B, C-C and D-D represented in figure 4 and which corresponds to the sections shown in figure 3.

In terms of the distribution of the movements of the fluid in the recirculator that has been described, it uses valves that can be lineal or rotational.

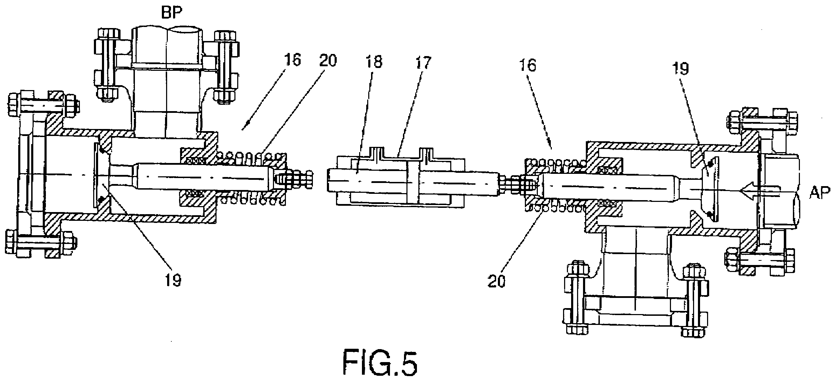

Specifically, figure 5 shows a system formed by two two-way valves, both referenced with the number 16, and with one of them corresponding to the high-pressure circuit referenced with AP and the other corresponding to the low-pressure circuit referenced with BP, and both valves 16 being actuated by a single cylinder 17 with a double rod 18, in such a way that the alternative actuation of said cylinder 17 and therefore the displacement of rod 18 in one direction or the other makes it impossible for both valves 16 to be open, always provided that the spring 20 associated with them is capable of closing the actual valve, which closure is, of course, done with the end or conical head 19 established in the actual ends of the rod 18, as it is clearly shown in figure 5.

Logically, this type of two-way valve requires a structure that is resistant and of certain importance since it has to withstand the stress created by the cylinder 17 over the valves, in order to achieve their opening.

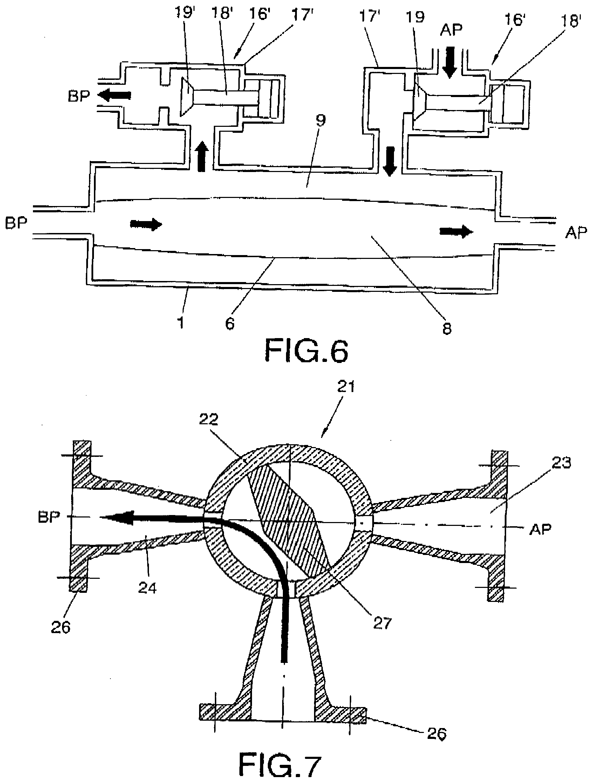

This drawback is solved by means of the embodiment shown in figure 6, in which are schematically represented the recirculator 1, the membrane 6, the high pressure AP and low pressure BP ends, and the two chambers, the inner chamber 8 and the outer chamber 9, established in the cylindrical body 1 of the recirculator by means of the membrane 6.

It has been said that this schematic representation corresponds to a solution that uses two independent valves 16', with the independent cylinders 17', the independent rods 18' and the closing seatings or heads of the valves 19', in such a way that according to that representation of figure 6, when the flow circulates via the inner chamber 8 of the recirculator, the volume contained in the outer chamber 9 is pumped towards the low-pressure BP zone via the corresponding valve 16', which is open, while the high-pressure AP valve 16' is closed, preventing the passage of the fluid subjected to a high pressure, all this in such a way that in the following phase of the cycle the high-pressure fluid will flow towards the outer chamber 9, remaining then closed the low-pressure valve.

As it is evident, as each valve 16' has its own actuation cylinder 17', no resistant bedplate is necessary since the stresses are confined to the casings of each valve, permitting the closing elements 18'-19' to be removed for inspection or repair without having to decouple the flanges of the main pipes.

Instead of the two-way valves 16 or 16', in certain cases and circumstances, a rotary valve 21 can be used; represented in figure 7, whose casing 22 is cylindrical and has three ports 23, 24 and 25, corresponding to the high-pressure intake AP, the low-pressure intake BP and the intake for the recirculator, respectively, these ports 23; 25 and 25 having their corresponding flanges 26 for carrying out the appropriate couplings.

Rotating inside the casing 22 of the rotary valve 21 is a piece in the form of a blade 27 which permits the connection or an alternative isolation among the three ports 23, 24 and 25. In the position shown in figure 7 the passage of fluid is being controlled from the recirculator, that is, through port 25, to the low-pressure BP zone, while the high-pressure AP port 23 remains cut off, all this in such a way that the rotation of that blade 27 will be able to establish one type of connection or the other between the high-pressure and low-pressure ports with respect to the recirculator.

With this distribution system the condition of impeding direct or indirect connection of the ports 23 and 24, in other words the high-pressure port AP and the BP port, is automatically achieved, always provided that a positive overlapping of the blade 27 is achieved when passing through the ports along with a reasonable seal between the actual blade 27 when passing through the ports and the casing 22. If both elements are cylindrical, said seal has to be achieved by means of an adjustment between the two pieces, with the drawbacks due to friction, abrasion and wear.

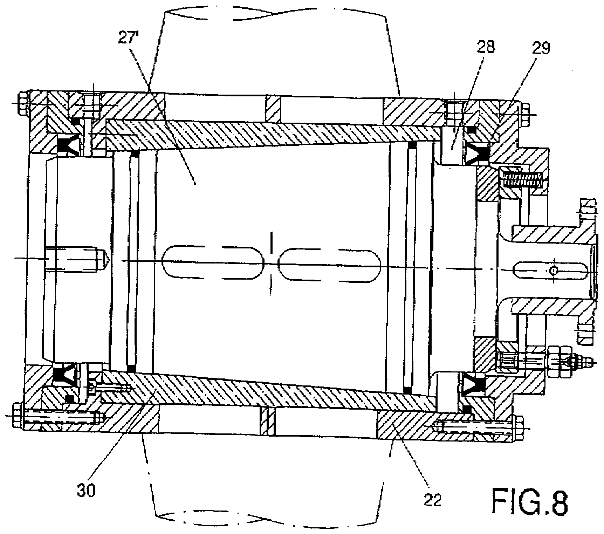

In order to avoid this circumstance, it is possible to opt for the solution shown in figure 8, of a conical design, with a casing 22' and a blade 27' where the inevitable wear of the surfaces referred to above is automatically compensated in this case with a slight axial displacement of the actual blade 27' which therefore remains at all times in contact with the inner surface of the casing 22'. Both the sealing and the displacement for automatic compensation of the wear is achieved by applying pressure to the chamber 28, so that the outer surface of the blade 27' and the inner surface of the casing 22' are forced together, providing sealing joints 29 at both ends of the inner shaft of the actual casing permitting the closure of the respective surfaces.

In this case, interposed between the blade 27' and the casing 22' is a bushing 30, internally conical and externally cylindrical, whose aim is to facilitate the conical machining and permit its easy replacement in the event of wear without having to replace the outer casing.

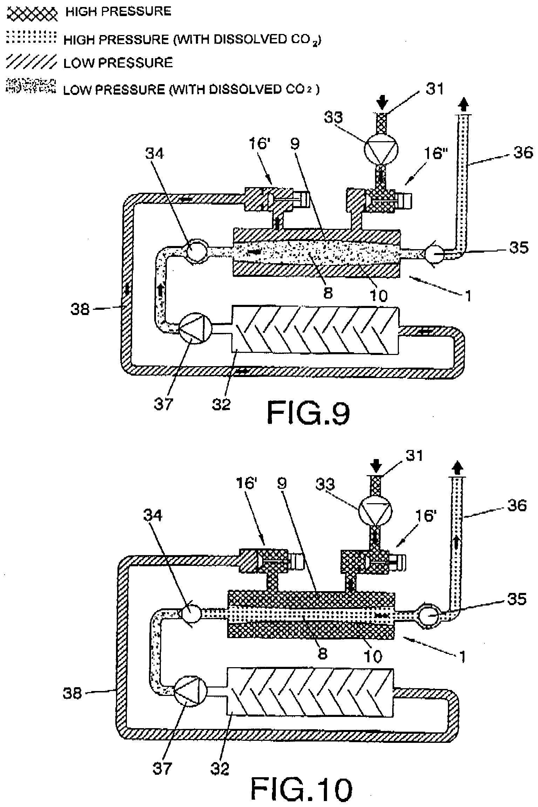

The general arrangement for establishing the impelling of the fluid by recirculation from the low-pressure medium to the high-pressure medium by means of recovery of the energy of the incoming fluid can be seen in figures 9 to 12, in which the low-pressure and high-pressure circuits have been indicated in a different way, along with the high-pressure circuits with dissolved CO₂ and the low-pressure circuits with dissolved CO₂.

In those figures the recirculator 1 can be seen with both chambers 8 and 9, in which the outer intake is carried out via the conduit 31, at the appropriate pressure, in such a way that said pressure is reduced for internal process needs to a value close to atmospheric, with the heat exchange or the dissolution taking place in the reactor 32 which, as can be seen, is connected via one part to the recirculator 1 and via another part to the outer chamber 9 of that recirculator 1.

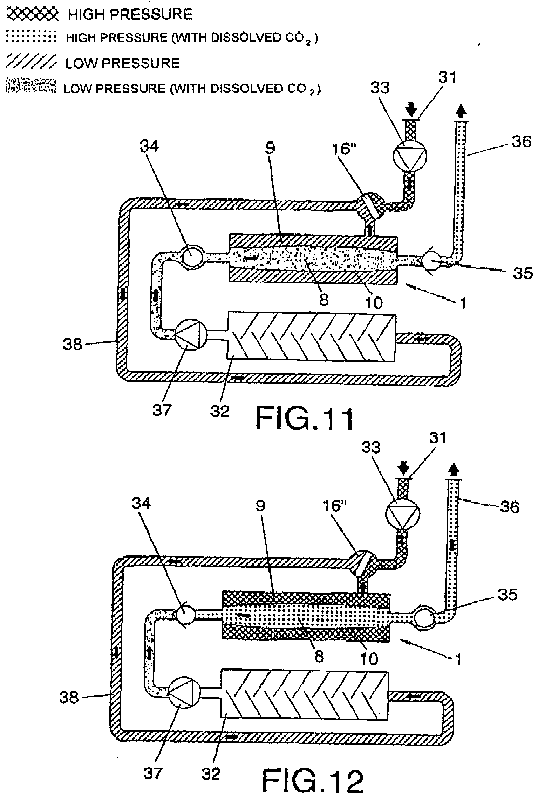

In figures 9 and 10 an intake pump 33 is established in the intake conduit 31, in which a two-way valve 16' is included connected to the outer chamber 9, provision also having been made for a second valve, also referenced as 16', which corresponds to the impeller valve and which is shown in the upper left-hand zone of the actual recirculator 1. Both valves 16' are two-way valves and can be replaced with a single three-way valve 16" which is shown in figures 11 and 12 as will be explained further below.

Moreover, in figures 9 and 10 it can be seen how the system includes two check valves 34 and 35, the first of them fitted in the conduit that connects the recirculator 1 with the reactor 32 and the second fitted in the impeller conduit 36, with an outlet pump 37 also being provided, fitted in the same conduit as the check valve 34.

Bearing in mind that the following explanation will consider how the intake is carried out via the outer chamber 9 and the impelling via the inner chamber 8, though the functioning in the opposite direction would be equally possible, represented in figure 8 is an instant of the work cycle in which the transfer of fluid at low pressure is being controlled from the recirculator 1 to the reactor 32, where the situation of the elements of the system or circuit is as follows:
The intake pump 33 is considered to be inactive in this part of the cycle, with the intake valve 16' provided in the intake conduit 31 being closed, while the impeller valve 16' located in the outlet conduit 38 is open, as is clearly represented in figure 9. In this way, the fluid contained in the outer chamber 9 of the recirculator 1 is at the same pressure as the reactor 32, which can be close to or practically equal to atmospheric.

In terms of the outlet pump 37, it will suck the fluid from the reactor 32 giving it a slight overpressure with the aim of proceeding to duct the fluid overcoming the check valve 34 and filling the inner chamber 8. In any case, this overpressure is not capable of overcoming the pressure of the impeller conduit 36 and so the check valve 35 remains closed.

As the inner chamber 8 of the recirculator 1 gradually fills, the fluid contained in the outer chamber 9 is simultaneously ejected and circulates freely through the impeller valve 16' fitted in the outlet conduit 38, the latter valve being open as was explained above, flowing the fluid to the reactor 32.

The pressure which the outlet pump 37 has to provide is limited to the strictly necessary for causing the expansion of the membrane 10, producing the circulation of the fluid contained in the chamber 9 of the recirculator. This pressure is very low, and is a function of the load losses generated by the circulations explained above, though most of the load loss and with it the increased energy input will correspond to the circulation of large flows.

Therefore, the aim of the design is to achieve a satisfactory compromise between the size of the equipment or facility and, in consequence, the investment required, and the operating costs, including energy consumption, a balance that has to be carried out in accordance with the expected useful life of the facility and of the amortization time of the system.

Once the entire effective volume of the recirculator 1 has been ejected, it begins the second part of the cycle, which takes place when the valve 16' fitted in the intake conduit 31 is opened and the valve 16' fitted in the outlet conduit 38 is closed, as shown in figure 10.

Evidently, it has to be ensured that the simultaneous opening of both valves 16' never takes place involuntarily, since there would be otherwise a dangerous direct connection between the high-pressure and low-pressure mediums.

In this case, as represented in figure 10, when the intake valve 16', i.e. the one in the intake conduit 31, is opened, the fluid that passes through it helped by the impeller pump 33 enters the chamber 9, while the impeller valve 16' fitted in the conduit 38 is closed, so that the volume entering the outer chamber 9 causes the exit of the same volume from the inner chamber 8 of the recirculator 1, the check valve 34 closing and preventing the backflow of the fluid, which has to find its outlet via valve 35 towards the impeller or outlet conduit 36. During this part of the cycle, both chambers 8 and 9 of the recirculator 1 are subjected to the action of high pressure.

The intake pump 33 provides a slight overpressure to the flow entering the system coming from the intake conduit 31, whose sole aim is to duct the fluid, filling the outer chamber 9 and overcoming the check valve 35. On account of identical arguments as explained in the first part of the cycle for the outlet pump 37, the overpressure to be provided by the intake pump 33 is very low.

In this second part of the cycle, the outlet pump 37 is regarded as being inactive, inactivity that is only apparent since, by having several units in parallel as explained further below, conveniently out of phase with each other, the intake pump 33 will provide a constant flow which will supply a slight overpressure.

Once the useful volume of the recirculator 1 has been ejected, a new cycle has to start with the opening of the intake valve and closing of the impeller valve.

Secondarily, it is possible to control the ducted flow by acting on the speed of the intake pump 33 and outlet pump 37.

Nevertheless, the situations reflected below would be completely useless:
a) The too fast succession of closures and openings of the valves, which would not permit the useful volume of the recirculator to be fully used since there is not enough time for its completely filling.
b) Maintaining the intake or outlet pumping once the recirculator's membrane reaches its maximum positions of expansion and constriction, with the result of zero flow during part of the cycle.

From the foregoing, it can be deduced that the optimization of the facility or system will be produced when the change of position of the valves and with it the inversion of the cycle takes place in a way that coincides with the moment when the end positions of the membrane are reached, and it is therefore possible to obtain variable flows without loss of efficiency, with no further care than the coordination of the actions stated above.

Figure 11 shows the arrangement resulting from replacing the two valves 16' with one three-way valve 16", in which the situation of the circuit is equivalent to that of figure 9.

As for figure 12, this figure shows the facility during the second part of the cycle, in which the situation of the circuit is equivalent to that of figure 10.

As shown in figures 11 and 12, by using the three-way valve 16" the recirculator 1 will only have one opening through which the fluid will flow alternatively in one direction or the other.

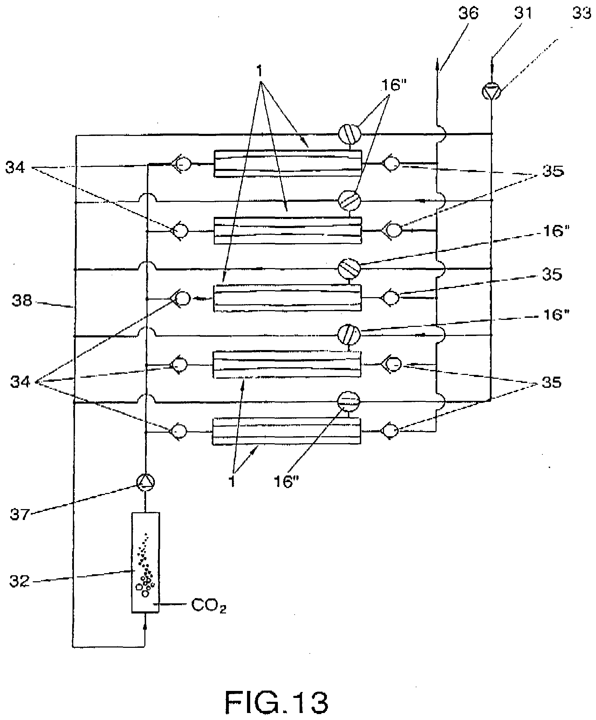

with the aim of achieving an outlet flow as uniform as possible, it is essential to have several recirculators 1 arranged in parallel, whose cycles are duly alternated so that they can complement each other reciprocally, these recirculators 1 being complemented with their corresponding valves 16", in this case three-way, as shown in figure 13, with the intake pump 34 and outlet pump 35 being common to them all, as is the process reactor 32, in the case shown applied to a process of dissolving CO₂ in such a manner that said figure 13 shows the facility consisting specifically of five sets of recirculators 1,

## Claims

1. SYSTEM FOR IMPELLING A FLUID BY RECIRCULATION FROM A LOW-PRESSURE MEDIUM TO A HIGH-PRESSURE MEDIUM, which, having the aim of recovering the energy contained in the fluid at high pressure in order to aid pumping from low to high pressure, thereby reducing the energy contribution required, comprises a recirculator (1) with an elongated cylindrical configuration, with a flexible tubular membrane (6), concentric with the same, establishing two independent and sealed chambers, an outer one (9) connected to an intake for the entrance of fluid and an inner one (8) connected by one end to the impeller conduit for the processed fluid to the outside, while the other end of said inner chamber (8) is connected to a heat exchanger or reactor of any kind (32), in turn connected to the outer chamber in order to permit the establishment of the distribution and processing of the fluid from its intake (31) to the outlet conduit (36).

2. **SYSTEM FOR IMPELLING A FLUID BY RECIRCULATION FROM A LOW-PRESSURE MEDIUM TO A HIGH-PRESSURE MEDIUM,** according to claim 1, **characterized in that** the recirculator (1) presents at its ends concentric and facing necks (3) between which is fixed the membrane (6) by means of the corresponding flanges (7).

3. **SYSTEM FOR IMPELLING A FLUID BY RECIRCULATION FROM A LOW-PRESSURE MEDIUM TO A HIGH-PRESSURE MEDIUM,** according to the above claims, **characterized in that** the membrane (6), mounted axially and concentrically with the recirculator (1), is able to undergo an expansion due to the entrance of fluid into the inner chamber (8), ejecting the fluid contained in the outer chamber (9), or undergo a constriction due to the entrance of fluid into the outer chamber (9) and corresponding impelling towards the outside of the fluid contained in the inner chamber (8), the sum of both volumes remaining constant independently of the shape adopted by the membrane (6) at each moment.

4. **SYSTEM FOR IMPELLING A FLUID BY RECIRCULATION FROM A LOW-PRESSURE MEDIUM TO A HIGH-PRESSURE MEDIUM,** according to claim 3, **characterized in that** the membrane (6) is complemented externally with an axial tube (10) provide with holes, as means of support for the actual membrane (6) in the expansion process thereof.

5. **SYSTEM FOR IMPELLING A FLUID BY RECIRCULATION FROM A LOW-PRESSURE MEDIUM TO A HIGH-PRESSURE MEDIUM,** according to claims 3 and 4, **characterized in that** the membrane (6) is complemented with an axial and concentric piece in the manner of a spine (11), defined by a central and axial tube (12) and several peripheral and longitudinal tubes (13) preferably three, out of phase with each other and joined to the central tube (12) via some bars in the manner of radial ribs (14), in such a way that in the rest position the membrane (6) is tangential to the peripheral tubes (13) while in the constriction phase the membrane (6) adapts itself to the piece forming the spine (11) adapting itself completely to the outer surface of the latter, given that the length of the outer perimeter of the spine coincides with that of the inner perimeter of the membrane.

6. **SYSTEM FOR IMPELLING A FLUID BY RECIRCULATION FROM A LOW-PRESSURE MEDIUM TO A HIGH-PRESSURE MEDIUM,** according to claims 3, 4 and 5. **characterized in that** on the piece constituting the spine (11) a series of pieces (15) are fitted adopting a form that progressively varies from the pure cylindrical configuration in the ends to the constricted configuration in the middle zone, with the tensions resulting from the change of section being distributed along a considerable length of the membrane (6).

7. **SYSTEM FOR IMPELLING A FLUID BY RECIRCULATION FROM A LOW-PRESSURE MEDIUM TO A HIGH-PRESSURE MEDIUM,** according to claim 1, **characterized in that** the distribution and processing of the fluid in the recirculator (1) is carried out by means of at least one valve (16, 16', 16'') in combination with intake (33) and outlet (37) pumps, along with check valves (34, 35).

8. **SYSTEM FOR IMPELLING A FLUID BY RECIRCULATION FROM A LOW-PRESSURE MEDIUM TO A HIGH-PRESSURE MEDIUM, according** to claim 7, **characterized in that** the valves are two-way valves (16), which are included with a single actuation cylinder (17) in which, a rod (18) has been established, the ends of which are carriers of the expansions (19) that determine the corresponding valve closing, said valves being associated with the respective springs (20) in order to establish the closing thereof,

9. **SYSTEM FOR IMPELLING A FLUID BY RECIRCULATION FROM A LOW-PRESSURE MEDIUM TO A HIGH-PRESSURE MEDIUM,** according to claim 8, **characterized in that**, instead of the shingle set of two-way valves (16), includes two independent valves (16').

10. **SYSTEM FOR IMPELLING A FLUID BY RECIRCULATION FROM A LOW-PRESSURE MEDIUM TO A HIGH-PRESSURE MEDIUM** according to claims 8 and 9, **characterized in that**, instead of the valves (16, 16'), it includes a three-way valve (16'').

11. **SYSTEM FOR IMPELLING A FLUID BY RECIRCULATION FROM A LOW-PRESSURE MEDIUM TO A HIGH-PRESSURE MEDIUM** according to claim 10, **characterized in that** the three-way valve includes a rotary valve (21,16") with a casing (22) of cylindrical configuration and provided with three ports (23), (24) and (25), corresponding to the high-pressure AP, low-pressure BP and recirculators intakes, respectively, in which casing (22) rotates a blade (27) which permits the alternative connection and/or isolation between ports (23), (24) and (25).

12. **SYSTEM FOR IMPELLING A FLUID BY RECIRCULATION FROM A LOW-PRESSURE MEDIUM TO A HIGH-PRESSURE MEDIUM** according to claim 9, **characterized in that** the intake valve (16') is fitted in the intake conduit (31) to the recirculator (1) while the outlet valve (16') of that recirculator (1) is fitted in the conduit (38) that connects the outer chamber (9) of said recirculator (1) to the reactor (32).

13. **SYSTEM FOR IMPELLING A FLUID BY RECIRCULATION FROM A LOW-PRESSURE MEDIUM TO A HIGH-PRESSURE MEDIUM,** according to claims 10 to 11, **characterized in that** the three-way valve (16") by itself permits the intake conduit (31) to be connected to the recirculator (1) and the latter to the reactor (32) via the conduit (38).

14. **SYSTEM FOR IMPELLING A FLUID BY RECIRCULATION FROM A LOW-PRESSURE MEDIUM TO A HIGH-PRESSURE MEDIUM**, according to claim 7, **characterized in that** the intake pump (33) is fitted in the intake conduit (31) to the recirculator (1), while the outlet pump (37) is fitted in the conduit that connects the said recirculator (1) with the reactor (32); provision having been made for one of the check valves (34) to be provided **in that** same conduit while the other of the check valves (35) is fitted in the outlet conduit (36) for the reactor (1).

15. **SYSTEM FOR IMPELLING A FLUID BY RECIRCULATION FROM A LOW-PRESSURE MEDIUM TO A HIGH-PRESSURE MEDIUM,** according to the above claims, **characterized in that** several recirculators (1) are mounted in parallel, with the functioning cycles alternating, with each recirculator (1) being associated to the corresponding valves, the intake (33) and outlet (37) pumps being common to them all, as are the check valves (34, 35).

## Patentansprüche

1. System zum Antreiben eines Fluids durch Rezirkulation von einem Niederdruckmedium zu einem Hochdruckmedium, das mit der Zielsetzung, die in dem Fluid bei einem hohen Druck enthaltene Energie wiederzugewinnen, um das Pumpen von dem Nieder- zu dem Hochdruck zu unterstützen und dadurch die erforderliche Energieverteilung zu reduzieren, einen Rezirkulator (1) umfasst, der eine längliche, zylindrische Konfiguration aufweist, wobei eine flexible, rohrförmige Membrane (6), die konzentrisch dazu angeordnet ist, zwei unabhängige und abgedichtete Kammern bildet, nämlich eine äußere Kammer (9), die mit einem Einlass für das Eintreten von Fluid verbunden ist, und eine innere Kammer (8), die an einem Ende mit der Antriebsleitung für das verarbeitete Fluid nach außen verbunden ist, während das andere Ende der inneren Kammer (8) mit einem Wärmetauscher oder Reaktor (32) einer beliebigen Art verbunden ist, der wiederum mit der äußeren Kammer verbunden ist, um eine Verteilung und eine Verarbeitung des Fluids von dem Einlass (31) zu einer Auslassleitung (36) zu gestatten.

2. System zum Antreiben eines Fluids durch Rezirkulation von einem Niederdruckmedium zu einem Hochdruckmedium nach Anspruch 1, **dadurch gekennzeichnet, dass** der Rezirkulator (1) an seinen Enden konzentrische und einander zugewandte Hälse (3) aufweist, zwischen denen die Membrane (6) mittels der entsprechenden Flansche (7) fixiert ist.

3. System zum Antreiben eines Fluids durch Rezirkulation von einem Niederdruckmedium zu einem Hochdruckmedium nach einem der vorstehenden Ansprüche, **dadurch gekennzeichnet, dass** die Membrane (6), die axial und konzentrisch mit dem Rezirkulator (1) montiert ist, eine Expansion aufgrund des Eintretens von Fluid in die innere Kammer (8) durchlaufen kann und das in der äußeren Kammer (9) enthaltene Fluid ausstößt oder aber eine Konstriktion aufgrund des Eintretens von Fluid in die äußere Kammer (9) durchlaufen kann und entsprechend das in der inneren Kammer (8) enthaltene Fluid nach außen antreibt, wobei die Summe beider Volumen unabhängig von der Form der Membrane (6) zu jedem Zeitpunkt konstant bleibt.

4. System zum Antreiben eines Fluids durch Rezirkulation von einem Niederdruckmedium zu einem Hochdruckmedium nach Anspruch 3, **dadurch gekennzeichnet, dass** die Membrane (6) weiterhin extern ein mit Löchern versehenes Axialrohr (10) umfasst, das als eine Stütze für die Membrane (6) während des Expansionsprozesses dient.

5. System zum Antreiben eines Fluids durch Rezirkulation von einem Niederdruckmedium zu einem Hochdruckmedium nach Anspruch 3 oder 4, **dadurch gekennzeichnet, dass** die Membrane (6) weiterhin ein axiales und konzentrisches Glied in der Form einer Säule (11) aufweist, die durch ein mittiges und axiales Rohr (12) und mehrere und vorzugsweise drei periphere und längliche Rohre (13), die nicht in Phase miteinander sind und über Stangen in der Form von radialen Rippen (14) mit dem zentralen Rohr (12) derart verbunden sind, dass die Membrane (6) in der Ruheposition tangential zu den Umfangsrohren (13) ist, gebildet wird, während sich die Membrane (6) in der Konstriktionsphase an den die Säule (11) bildenden Teil anpasst, indem sie sich vollständig an die Außenfläche derselben anpasst, wobei die Länge des Außendurchmessers der Säule mit derjenigen des Innendurchmessers der Membrane zusammenfällt.

6. System zum Antreiben eines Fluids durch Rezirkulation von einem Niederdruckmedium zu einem Hochdruckmedium nach einem der Ansprüche 3, 4 und 5, **dadurch gekennzeichnet, dass** an den die Säule (11) bildenden Teil eine Reihe von Teilen (15) gepasst sind, die eine Form annehmen, die zunehmend von der rein zylindrischen Konfiguration an den Enden zu der verengten Form in der mittleren Zone varüert, wobei die aus der Änderung des Schnitts resultierenden Spannungen entlang einer beträchtlichen Länge der Membrane (6) verteilt sind.

7. System zum Antreiben eines Fluids durch Rezirkulation von einem Niederdruckmedium zu einem Hochdruckmedium nach Anspruch 1, **dadurch gekennzeichnet, dass** die Verteilung und Verarbeitung des Fluids in dem Rezirkulator (1) durch wenigstens ein Ventil (16, 16', 16") in Kombination mit Einlass- und Auslasspumpen (33, 37) und Rückschlagventilen (34, 35) durchgeführt wird.

8. System zum Antreiben eines Fluids durch Rezirkulation von einem Niederdruckmedium zu einem Hochdruckmedium nach Anspruch 7, **dadurch gekennzeichnet, dass** die Ventile Zwei-Wege-Ventile (16) sind, die mit einem einzelnen Betätigungszylinder (17) enthalten sind, in dem eine Stange (18) vorgesehen ist, deren Enden Träger der Expansionen (19) sind, die das Schließen des entsprechenden Ventils bestimmen, wobei die Ventile mit entsprechenden Federn (20) assoziiert sind, die ein Schließen derselben bewirken.

9. System zum Antreiben eines Fluids durch Rezirkulation von einem Niederdruckmedium zu einem Hochdruckmedium nach Anspruch 8, **dadurch gekennzeichnet, dass** anstelle des einzelnen Satzes von Zwei-Wege-Ventilen (16) zwei unabhängige Ventile (16') vorgesehen sind.

10. System zum Antreiben eines Fluids durch Rezirkulation von einem Niederdruckmedium zu einem Hochdruckmedium nach Anspruch 8 oder 9, **dadurch gekennzeichnet, dass** anstelle der Ventile (16, 16') ein Drei-Wege-Ventil (16") vorgesehen ist.

11. System zum Antreiben eines Fluids durch Rezirkulation von einem Niederdruckmedium zu einem Hochdruckmedium nach Anspruch 10, **dadurch gekennzeichnet, dass** das Drei-Wege-Ventil ein Drehventil (12, 16") mit einem Gehäuse (22) in einer zylindrischen Konfiguration enthält und mit drei Anschlüssen (23, 24 und 25) jeweils in Entsprechung zu Hochdruck (AP)-, Niederdruck (BP)- und Rezirkulatoreinlässen versehen ist, wobei sich in dem Gehäuse (22) ein Blatt (27) dreht, das eine alternative Verbindung und/oder Trennung zwischen den Anschlüssen (23, 24 und 25) gestattet.

12. System zum Antreiben eines Fluids durch Rezirkulation von einem Niederdruckmedium zu einem Hochdruckmedium nach Anspruch 9, **dadurch gekennzeichnet, dass** das Einlassventil (16') in die Einlassleitung (31) zu dem Rezirkulator (1) gepasst ist, während das Auslassventil (16') des Rezirkulators (1) in die Leitung (38), die die äußere Kammer (9) des Rezirkulators (1) mit dem Reaktor (32) verbindet, gepasst ist.

13. System zum Antreiben eines Fluids durch Rezirkulation von einem Niederdruckmedium zu einem Hochdruckmedium nach Anspruch 10 oder 11, **dadurch gekennzeichnet, dass** das Drei-Wege-Ventil (16") selbst gestattet, dass die Einlassleitung (31) mit dem Rezirkulator (1) und der Rezirkulator mit dem Reaktor (32) über die Leitung (38) verbunden wird.

14. System zum Antreiben eines Fluids durch Rezirkulation von einem Niederdruckmedium zu einem Hochdruckmedium nach Anspruch 7, **dadurch gekennzeichnet, dass** die Einlasspumpe (33) in die Einlassleitung (31) zu dem Rezirkulator (1) gepasst ist, während die Auslasspumpe (37) in die Leitung, die den Rezirkulator (1) mit dem Reaktor (32) verbindet, gepasst ist, wobei eines der Rückschlagventile (34) in die gleiche Leitung gepasst ist, während das andere der Rückschlagventile (35) in die Auslassleitung (36) für den Reaktor (1) gepasst ist.

15. System zum Antreiben eines Fluids durch Rezirkulation von einem Niederdruckmedium zu einem Hochdruckmedium nach einem der vorstehenden Ansprüche, **dadurch gekennzeichnet, dass** mehrere Rezirkulatoren (1) parallel montiert sind, wobei die Funktionszyklen alternieren, wobei jeder Rezirkulator (1) mit den entsprechenden Ventilen assoziiert ist und wobei die Einlass- und Auslasspumpen (33, 37) ebenso wie die Rückschlagventile (34, 35) für alle diese gemeinsam vorgesehen sind.

## Revendications

1. Système pour pousser un fluide par recirculation d'un milieu à basse pression vers un milieu à haute pression qui, ayant pour but de récupérer l'énergie contenue dans le fluide à haute pression afin d'assister le pompage de la basse à la haute pression, réduisant ainsi la contribution d'énergie requise, comprend un recirculateur (1) avec une configuration cylindrique allongée, avec une membrane tubulaire souple (6), concentrique avec ce dernier, établissant deux chambres indépendantes et étanches, une chambre externe (9) étant raccordée à une entrée pour l'entrée du fluide et une chambre interne (8) étant raccordée par une extrémité au conduit d'impulseur pour le fluide traité vers l'extérieur, alors que l'autre extrémité de ladite chambre interne (8) est raccordée à un échangeur de chaleur ou réacteur de n'importe quel type (32), à son tour raccordé à la chambre externe afin de permettre l'établissement de la distribution et du traitement du fluide, de son entrée (31) au conduit de sortie (36).

2. Système pour pousser un fluide par recirculation d'un milieu à basse pression vers un milieu à haute pression selon la revendication 1, **caractérisé en ce que** le recirculateur (1) présente, au niveau de ses extrémités, des cols concentriques et en vis-à-vis (3) entre lesquels est fixée la membrane (6) au moyen de brides (7) correspondantes.

3. Système pour pousser un fluide par recirculation d'un milieu à basse pression vers un milieu à haute pression selon les revendications précédentes, **caractérisé en ce que** la membrane (6), montée de manière axiale et concentrique avec le recirculateur (1), peut subir une dilatation due à l'entrée du fluide dans la chambre interne (8), éjectant le fluide contenu dans la chambre externe (9) ou subir une constriction due à l'entrée du fluide dans la chambre externe (9) et poussant de manière correspondante vers l'extérieur du fluide contenu dans la chambre interne (8), la somme des deux volumes restant constante indépendamment de la forme adoptée par la membrane (6) à tout moment.

4. Système pour pousser un fluide par recirculation d'un milieu à basse pression vers un milieu à haute pression selon la revendication 3, **caractérisé en ce que** la membrane (6) est complétée extérieurement par un tube axial (10) prévu avec des trous, en tant que moyen de support pour la véritable membrane (6) dans son processus de dilatation.

5. Système pour pousser un fluide par recirculation d'un milieu à basse pression vers un milieu à haute pression selon les revendications 3 ou 4, **caractérisé en ce que** la membrane (6) est complétée par une pièce axiale et concentrique à la manière d'une épine (11), définie par un tube central et axial (12) et plusieurs tubes périphériques et longitudinaux (13), de préférence trois, déphasés les uns par rapport aux autres et assemblés au tube central (12) par quelques barres à la manière de nervures radiales (14), de sorte que dans la position de repos, la membrane (6) est tangentielle aux tubes périphériques (13) alors que dans la phase de constriction, la membrane (6) s'adapte à la pièce formant l'épine (11) s'adaptant elle-même complètement à la surface externe de cette dernière, étant donné que la longueur du périmètre externe de l'épine coïncide avec celle du périmètre interne de la membrane.

6. Système pour pousser un fluide par recirculation d'un milieu à basse pression vers un milieu à haute pression selon les revendications 3, 4 et 5, **caractérisé en ce que** sur la pièce constituant l'épine (11), sont montées une série de pièces (15) adoptant une forme qui varie progressivement de la configuration cylindrique pure dans les extrémités à la configuration réduite dans la zone centrale, avec des tensions provenant du changement de section qui sont réparties le long d'une longueur considérable de la membrane (6).

7. Système pour pousser un fluide par recirculation d'un milieu à basse pression vers un milieu à haute pression selon la revendication 1, **caractérisé en ce que** la distribution et le traitement du fluide dans le recirculateur (1) sont réalisés au moyen d'au moins une valve (16, 16', 16") en combinaison avec les pompes d'entrée (33) et de sortie (37), conjointement avec des valves de non-retour (34, 35).

8. Système pour pousser un fluide par recirculation d'un milieu à basse pression vers un milieu à haute pression selon la revendication 7, **caractérisé en ce que** les valves sont des valves à deux voies (16) qui sont comprises avec un cylindre à simple effet (17) dans lequel une tige (18) a été établie, dont les extrémités sont des supports des dilatations (19) qui déterminent la fermeture de valve correspondante, lesdites valves étant associées avec les ressorts (20) respectifs afin d'établir leur fermeture.

9. Système pour pousser un fluide par recirculation d'un milieu à basse pression vers un milieu à haute pression selon la revendication 8, **caractérisé en ce que**, au lieu du simple ensemble de valves à deux voies (16), comprend deux valves (16') indépendantes.

10. Système pour pousser un fluide par recirculation d'un milieu à basse pression vers un milieu à haute pression selon les revendications 8 et 9, **caractérisé en ce que**, au lieu des valves (16, 16'), il comprend une valve à trois voies (16").

11. Système pour pousser un fluide par recirculation d'un milieu à basse pression vers un milieu à haute pression selon la revendication 10, **caractérisé en ce que** la valve à trois voies comprend une valve rotative (21, 16") avec un boîtier (22) de configuration cylindrique et prévu avec trois orifices (23), (24) et (25), correspondant à l'AP à haute pression, au BP à basse pression et aux entrées de recirculateur, respectivement, dans lequel boîtier (22), tourne une aube (27) qui permet le raccordement alternatif et/ou l'isolation entre les orifices (23), (24) et (25).

12. Système pour pousser un fluide par recirculation d'un milieu à basse pression vers un milieu à haute pression selon la revendication 9, **caractérisé en ce que** la valve d'entrée (16') est montée dans le conduit d'entrée (31) sur le recirculateur (1) alors que la valve de sortie (16') de ce recirculateur (1) est montée dans le conduit (38) qui raccorde la chambre externe (9) dudit recirculateur (1) au réacteur (32).

13. Système pour pousser un fluide par recirculation d'un milieu à basse pression vers un milieu à haute pression selon les revendications 10 à 11, **caractérisé en ce que** la valve à trois voies (16") permet d'elle-même de raccorder le conduit d'entrée (31) au recirculateur (1) et ce dernier au réacteur (32) via le conduit (38).

14. Système pour pousser un fluide par recirculation d'un milieu à basse pression vers un milieu à haute pression selon la revendication 7, **caractérisé en ce que** la pompe d'entrée (33) est montée dans le conduit d'entrée (31) sur le recirculateur (1), alors que la pompe de sortie (37) est montée dans le conduit qui raccorde ledit recirculateur (1) avec le réacteur (32) ; on a prévu que l'une des valves de non-retour (34) soit prévue dans ce même conduit alors que l'autre des valves de non-retour (35) est montée dans le conduit de sortie (36) pour le réacteur (1).

15. Système pour pousser un fluide par recirculation d'un milieu à basse pression vers un milieu à haute pression selon les revendications précédentes, **caractérisé en ce que** plusieurs recirculateurs (1) sont montés en parallèle, avec des cycles de fonctionnement qui alternent, avec chaque recirculateur (1) qui est associé aux valves correspondantes, les pompes d'entrée (33) et de sortie (37) étant communes à tous, comme le sont les valves de non-retour (34, 35).
